(19) Europäisches Patentamt
European Patent Office
Office européen des brevets

(11) **EP 1 606 808 B1**

(12) **EUROPEAN PATENT SPECIFICATION**

(45) Date of publication and mention
of the grant of the patent:
**10.09.2008  Bulletin 2008/37**

(51) Int Cl.:
***G11B 7/135*** (2006.01)

(21) Application number: **04720680.0**

(22) Date of filing: **15.03.2004**

(86) International application number:
**PCT/IB2004/050250**

(87) International publication number:
**WO 2004/084202 (30.09.2004 Gazette 2004/40)**

(54) **OPTICAL SCANNING DEVICE**

OPTISCHE ABTASTVORRICHTUNG

DISPOSITIF DE BALAYAGE OPTIQUE

(84) Designated Contracting States:
**AT BE BG CH CY CZ DE DK EE ES FI FR GB GR HU IE IT LI LU MC NL PL PT RO SE SI SK TR**

(30) Priority: **17.03.2003  EP 03100672**

(43) Date of publication of application:
**21.12.2005  Bulletin 2005/51**

(73) Proprietor: **Koninklijke Philips Electronics N.V.**
**5621 BA  Eindhoven (NL)**

(72) Inventors:
• **HENDRIKS, Bernardus, H., W.**
**NL-5656 AA Eindhoven (NL)**
• **LIEDENBAUM, Coen, T., H., F.**
**NL-5656 AA Eindhoven (NL)**
• **COENE, Willem, M., J., M.**
**NL-5656 AA Eindhoven (NL)**

(74) Representative: **Uittenbogaard, Frank**
**Philips**
**Intellectual Property & Standards**
**P.O. Box 220**
**5600 AE Eindhoven (NL)**

(56) References cited:
**EP-A- 0 597 202          EP-A- 0 735 527**
**EP-A- 1 241 669          WO-A-20/04029938**
**US-B1- 6 373 808**

**Description**

This invention relates to an optical scanning device for scanning an optical record carrier, such as an optical disc, comprising an information layer, the device comprising a radiation source for generating a main radiation beam and a subsidiary radiation beam, and a lens system, located between the radiation source and the information layer, for converging the main radiation beam and the subsidiary radiation beam to a spot on the information layer. In particular, the invention relates to an optical scanning device arranged to provide crosstalk cancellation.

Crosstalk, arising due to the fact that the scanning spot also partly illuminates the adjacent tracks, forms a limitation on the amount of data that can be read from, and hence stored on, an optical disc. The crosstalk increases when the spot is aberrated, for instance due to disc tilt. In this case the first side-lobe of the spot, normally in the form of an Airy disc, increases in amplitude and more light is reflected from the adjacent tracks, thus leading to more crosstalk.

A known way to reduce the crosstalk, referred to as a three-spot crosstalk cancellation method, is by adding two off-axis beams to detect the signals from the adjacent tracks. These signals are used to correct the crosstalk in the main beam. The method effectively increases the spatial resolution of the main beam and is referred to herein as a three-channel method. A system using this method is sensitive to delay time fluctuations due to wavelength changes and decentring of the disc. A three channel crosstalk cancellation method is described in US-A-6163518, EP-A-0597202 and ER-A-1241669.

A known method of increasing the spatial resolution, using coaxial dual beams which are orthogonally polarized is described in US-A-6115345, US-A-6185168 and EP-A-0735527. The apparatus is referred to as a "Super-Resolution Optical Head". The incoming beam is split into two orthogonally polarized beams. One of the polarized components (a main beam) passes through a polarizing phase plate without phase modulation, and is focused onto an optical disc to a diffraction limited optical spot. The other polarized component (a subsidiary beam) is modulated by the polarizing phase plate, which is divided into two regions with a phase step of $(0,\pi)$ to provide a rotationally varying phase profile in the subsidiary beam which gives rise to a dual-peaked subsidiary beam spot having peaks located at the peripheral edges of the main beam. Increased spatial resolution is achieved by subtracting the high-frequency signal derived from the subsidiary beam from that of the main beam. US-A-6115345 and US-A-6185168 also describe alternative phase profiles for generating the subsidiary beam. The phase plate is divided into four quadrants, adding phases $0$, $\pi$, $0$, $\pi$ to the sub-beam. In an alternative embodiment the phase plate is divided into N segments, the subsequent segments adding phases of $0$, $2\pi/N$, $(2\pi/N)x2$, $(2\pi/N)x3$, .....and $(2\pi/N)x(N-1)$.

It is an object of the invention to provide improvements in crosstalk cancellation methods used in optical scanning devices. In accordance with the present invention there is provided an optical scanning device for scanning an optical record carrier comprising an information layer, the device comprising: a radiation source arrangement for generating a main radiation beam, a subsidiary radiation beam and at least one side beam;

a lens system located between the radiation source arrangement and the information layer, for converging the main beam, the subsidiary beam and the at least one side beam to respective spots on the information layer;

a radiation detector arrangement for detecting information signals in each of the main beam, the at least one side beam and the subsidiary beam; and

a signal processing arrangement for conducting crosstalk cancellation using the information signals detected in each of said main beam, said at least one side beam and said subsidiary beam to generate an output information signal,

wherein the main beam spot and the subsidiary beam spot are substantially coaxial, the at least one side beam spot is displaced with respect to the main beam spot, and the subsidiary beam spot has a radial intensity profile which is different to the intensity profile of the main beam spot.

It has been found that the orthogonality, in terms of cross talk canceling performance, of the information signals provided in side beam channels and a coaxial subsidiary beam channel is such as to warrant use of each in combination, rather than as alternatives as in the prior art. Embodiments of the invention, which use a four channel crosstalk canceling scheme incorporating the main beam information signal and each of two side beams and the subsidiary beam information signals, are capable of significantly improving crosstalk cancellation performance. The invention can be used in optical recording systems to either improve the tolerances of the system or to increase the achievable data density, both of which are important desiderata.

An improved crosstalk canceling performance may be achieved by combining each of a single side beam channel and the subsidiary beam channel with the main beam channel. However, preferably two separate side beam channels are used, with two side beam spots each being displaced to an opposite side of the main beam spot so as to detect information signals from adjacent track sections to each side of the track section currently being scanned by the main beam spot. Preferably the centers of the side beam spots are each displaced from the main beam spot by at least half a track pitch, which is the distance between adjacent data tracks on the information layer. More preferably, the displacement is approximately one-track pitch in a direction orthogonal to the track direction, such that the centers of the side beams scan the immediately adjacent tracks sections.

The subsidiary beam spot is substantially coaxial with the main beam spot. Preferably, the center of the subsidiary beam spot is located within the full width at half-maximum area of the main beam spot. More preferably, the centres of the subsidiary beam spot and the main beam spot coincide with a greater accuracy. In any case, the centres are preferably separated by less than a quarter of the track pitch, which is the distance between adjacent data tracks on the information layer. The main beam spot side lobe, which is generally annular, and the subsidiary beam spot, which is also preferably annular, tend to overlap on each side of the main beam spot. Whilst the subsidiary beam spot is preferably substantially annular, the subsidiary beam spot may have some rotational intensity variance, the degree of which will depend upon the method whereby a suitable shape of the subsidiary beam spot is configured.

The optical scanning device preferably includes a phase modulating arrangement for generating an angularly-varying phase profile in the subsidiary radiation beam, the phase profile varying with an azimuthal angle measured about an optical axis of the subsidiary radiation beam, whereby a suitable shape of the subsidiary beam spot is configured. Preferably, the phase profile introduced into the subsidiary beam is such that the phases introduced, when taken in modulo $2\pi$ form, successively cycle through 0 to $2\pi$ at least once, in each cycle taking at least a relatively low value and a relatively high value, whereby the subsidiary beam spot is provided with an intensity distribution on the information layer which overlaps that of the main beam spot side-lobe. In certain embodiments the relatively low value may be followed directly by the relatively high value, using a stepped structure. In further embodiments, in which the phase modulating arrangements have more complex stepped structures or smoothly varying structures, a plurality of successively higher values may follow the relatively low value.

Further, by cycling through 0 to $2\pi$ at least twice, crosstalk cancellation can be further improved relative to that achievable using a phase profile as described in the prior art described in US-A-6115345 and US-A-6185168. In these prior art arrangements the phase profile is divided into N segments, the N segments imparting relative phases advancing stepwise in the sequence of 0, $2\pi/N$, $(2\pi/N)x2$, $(2\pi/N)x3$, .....and $(2\pi/N)x(N-1)$. In contrast, in one embodiment of the present invention, the phase modulating arrangement has a phase profile having N segment-shaped regions, the N regions imparting a relative phase advancing stepwise in the sequence of 0, $2\pi n/N$, $(2\pi n/N)x2$, $(2\pi n/N)x3$, .....and $(2\pi n/N)x(N-1)$, where n is an integral value greater than one and the phases are taken in modulo $2\pi$ form. This provides a further improved crosstalk cancellation performance.

In a further embodiment of the invention the phase modulating arrangement comprises a surface providing a continuously varying phase profile which cycles from 0 to $2\pi$ at least once. The above-described stepwise arrangement generally approximates the continually varying phase profile of this embodiment.

In a yet further embodiment, a stepwise arrangement, which generally approximates the continually varying phase profile of the above embodiment, is used in a birefringent phase modulating arrangement. The step heights are selected such that the arrangement has substantially no effect on the main beam. In this case, a single radiation emitter can be used, and wavelength variations do not occur between the main channel and the crosstalk cancellation channel.

Preferably, as will be described in further detail below, the arrangement has a phase profile cycling through 0 to $2\pi$ three times.

The effectiveness of crosstalk cancellation can be improved by using super-resolution blocking applied to one or both of the main beam and the subsidiary beam.

Features and advantages of various embodiments of the invention will become apparent from the following description, given by way of example only, of preferred embodiments of the invention, which refers to the accompanying drawings, wherein:

Figure 1 is a schematic illustration of components of an optical scanning device according to an embodiment of the invention;

Figure 2 is a schematic block diagram showing a signal processing arrangement used in embodiments of the invention;

Figures 3 to 6 are views of an optical element in accordance with different embodiments of the invention;

Figure 7 shows plots of intensity distributions for main and subsidiary beam spots of different types;

Figure 8 shows jitter produced using different crosstalk cancellation methods;

Figures 9 and 10 show plots of intensity distributions for main and subsidiary beam spots generated using super resolution techniques;

Figure 11 shows plots of jitter versus radial tilt for different crosstalk cancellation methods;

Figure 12 is a schematic illustration of components of an optical scanning device arranged in accordance with an alternative embodiment of the invention;

Figure 13 shows step height approximations used in an embodiment of the invention; and

Figure 14 shows plots of intensity distribution for spots of different types.

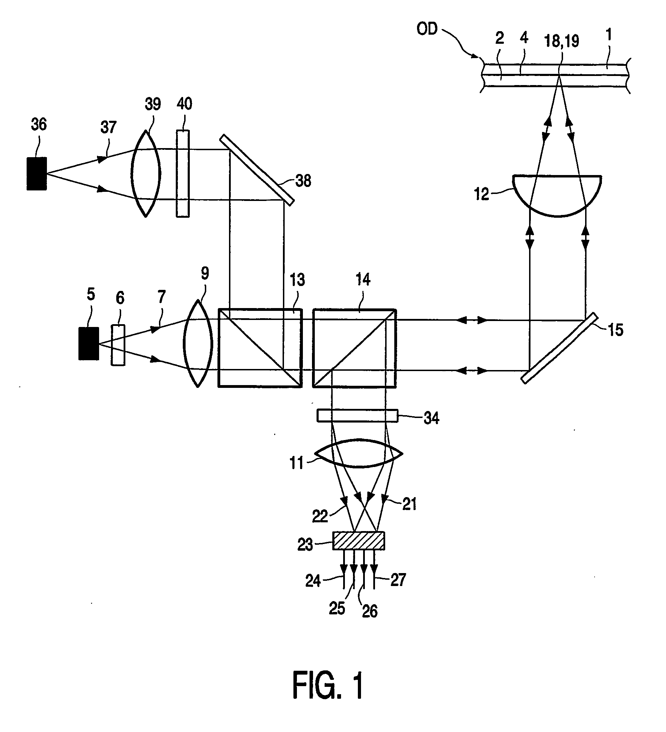

Referring now to Figure 1, which shows a schematic illustration of components of an optical scanning device, in accordance with the invention, for scanning an optical disc OD the optical disc OD comprises a substrate 1 and a transparent layer 2, between which at least one information layer 4 is arranged. In the case of a dual-layer optical disc, as illustrated, two information layers are arranged behind the transparent layer 2, at different depths within the disc and a further transparent layer separates the two information layers.

Information may be stored in the information layer 4 of the optical disc in the form of optically detectable marks arranged in substantially parallel, concentric or spiral tracks, not indicated in Figure 1. The marks may be in any optically readable form, e.g. in the form of pits, or areas with a reflection coefficient or a direction of magnetization different from their surroundings, or a combination of these forms.

The scanning device includes an optical pickup unit (OPU) mounted on a radially-movable sledge. The OPU includes all components illustrated in Figure 1, other than the disc OD. The scanning device includes a radiation source arrangement, which comprises a radiation emitter 5, for example a semi-conductor laser, which emits a diverging linearly polarized main radiation beam 7 onto a three spots grating 6 which generates two side beams (not shown) which have central rays which are displaced from the central ray of the main beam. The side beams travel through the optical system along with the main beam 7 and are focused as side beam spots onto track sections on the disc adjacent the track being scanned by the main beam spot. The centres of the side beam spots are displaced to each of two opposite sides of the center of the main beam spot. In the following, reference is made to the path of the main beam through the optical system, but it should be understood that the side beams travel along a similar path.

The lens system includes a collimator lens 9, an objective lens 12, and a condenser lens 11. The objective lens 12 is rigidly mounted within mechanical actuators (not shown) for performing radial tracking servo and focus servo adjustment of the position of the objective lens 12. The collimator lens 9 refracts the diverging main beam 7 to form a collimated beam which passes through a first polarizing beam splitter 13. A non-polarizing beam splitter 14 transmits and reflects the radiation within the lens system with a 50% efficiency, independent of polarization. On passing through the second beam splitter, the main beam is directed towards objective lens 12 by folding mirror 15.

The objective lens 12 transforms the collimated main beam into a converging beam having a selected numerical aperture (NA), which comes to a main beam spot 18 following a track on the information layer 4 being scanned. As noted above, the side beams come to side beam spots arranged on respectively opposite sides of the main beam spot and fall on an adjacent track.

Radiation of the converging main beam reflected by the information layer 4 forms a diverging reflected beam, which returns along the optical path of the forward converging beam. The objective lens 12 transforms the reflected beam to a substantially collimated reflected beam, and the beam splitter 14 separates the forward and reflected beams by transmitting the reflected beam towards the condenser lens 11.

The condenser lens 11 transforms the incident beam into a convergent reflected main beam 22 focused on a radiation detector arrangement, generally indicated by a single element 23 although a plurality of photodetector elements are used. The photodetector elements capture the radiation and convert it into electrical signals. One of these signals is a main beam information signal 24, which is a detector channel which represents the information read from the track on the information layer being scanned by the main beam spot. Another signal is a focus error signal (not shown) which represents the axial difference in height between the spot 18 and the information layer 4 being scanned. Another signal is a tracking error signal (not shown) which represents a radial deviation of the spot from the track being scanned. Each of the focus error and tracking error signal are input to servo mechanical actuators controlling the position of objective lens 12 during scanning. Another set of signals is a first side beam information signal 25, and a second side beam information signal 26, which are separate detector channels which represent the information read from the parts of the information layer being scanned by each of the two side beams respectively.

Also included in the radiation source arrangement is a second radiation emitter 36 for emitting linearly-polarized radiation, for example a semiconductor laser. The second radiation emitter 36 generates a subsidiary radiation beam 37 having a polarization which is orthogonal to the polarization of the radiation beam 7 generated by the first radiation emitter 5. On exit from the radiation emitter 36, the diverging beam is collimated by collimating lens 39 and passed through phase modulating arrangement 40, which will be described in further detail below. The subsidiary beam is then folded through folding mirror 38, and coupled into the main optical light path using polarizing beam splitter 13 and forms a subsidiary beam spot 19 coaxial with the main beam spot 18 on the information layer 4 of the optical disc. On reflection, the subsidiary beam is coupled out of the main optical path by non-polarizing beam splitter 14 towards detection systems 23.

Also included in the optical scanning device is a polarization-selective grating 34, which separates the main beam 22 and the subsidiary beam 21, by means of their orthogonal polarization's, to fall onto different parts of the detector arrangement 23, so that the information carried in subsidiary beam can be read in a separate detector channel. The output from the subsidiary beam detector element is output as a subsidiary beam information signal 27.

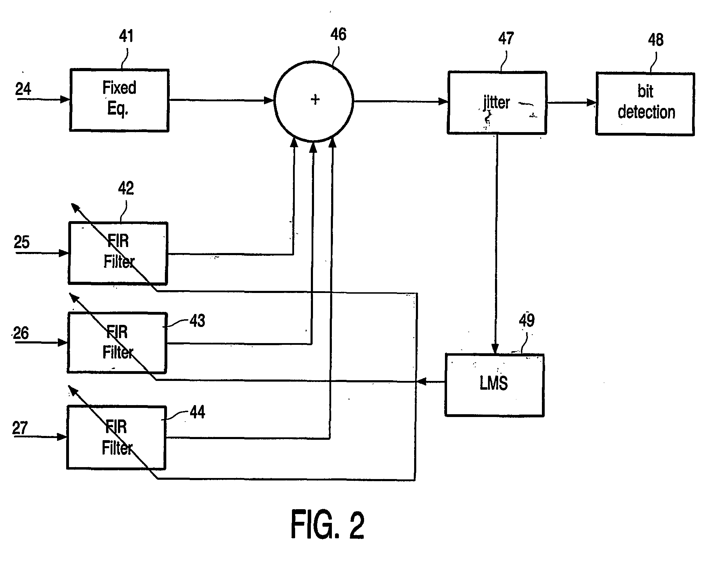

Figure 2 shows a signal processing arrangement used to process the high frequency information signals 24, 25, 26, 27 from the main beam, first side beam, second side beam and subsidiary beam respectively. The main beam information signal 24 is passed through a fixed equalizer 41, for example a 5-tap equalizer, of the type used in Digital Versatile Disc (DVD) signal processing circuitry, with tap-weights of for example [-5, 0, 32, 0, -5]. The first and second side beam information signals 25, 26 and the subsidiary beam information signal 27 are passed through respective multi-tap adaptive finite impulse response (FIR) filters 42, 43, 44. The filtered version of the first and second side beam information signals 25, 26 and the subsidiary beam information signal 27 are added at combining node 46 to the equalized form of the main beam information signal 24, and by this addition, a crosstalk-cancelled signal is produced in which the output information signal quality is improved. The signal quality can for instance be measured in terms of the jitter as detected in a phase-locked loop (PLL) 47. The tap-weights of the correction filters 42, 43, 44 are updated according to a "minimum-jitter" criterion, the jitter being evaluated at the zero-crossings of the crosstalk-cancelled signal. A Least-Mean-Squares (LMS) signal processing element 49 updates the tap-weights of the three correction filters 42, 43, 44. Bit detection processing, at element 48, is carried out on the crosstalk-cancelled information signal.

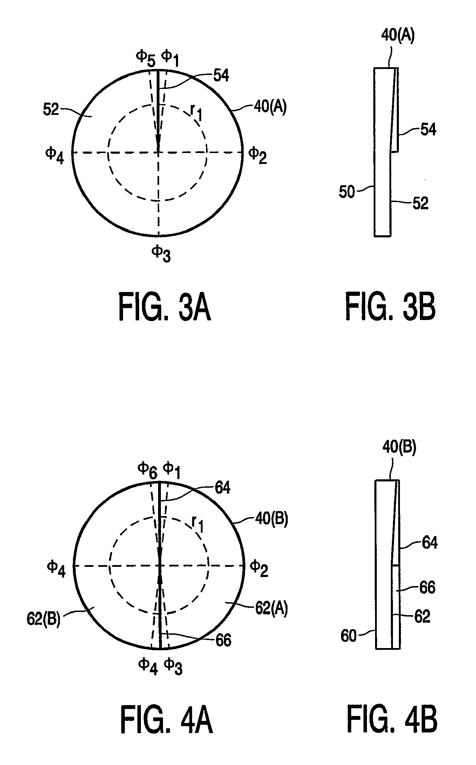

Each of Figures 3 to 6 show optical elements suitable for generating a phase profile in the subsidiary beam configured to provide an annular subsidiary beam spot. Figure 3(A) shows a phase modulating arrangement in the form of an optical element 40(A) in accordance with one embodiment of the invention, in plan view, whilst Figure 3(B) shows the element in side view taken from the left-hand side of the page. The phase modulating element 40(A) has a first planar surface 50 and a second non-planar surface 52. The second surface is rotationally-varying. The height of the second surface 52 of the element 40(A) varies with azimuthal angle $\varphi$ measured about the center of the element, corresponding to the optical axis of the subsidiary radiation beam. In this embodiment, the second surface 52 has a height (being the distance between the first surface 50 and the second surface 52) which is constant in a radial direction. The height increases continuously, proportional to the azimuthal angle $\varphi$. A height step line 54 presents a discontinuous variation in the height on the surface 52.

The relative phases produced around the element 40(A), when taken in modulo $2\pi$ form, successively cycle through zero to $2\pi$, at least once. The number of cycles is referred to below using the reference numeral n. The second surface thus resembles a plane wound helically a single turn around the optical axis, the increase in height of the plane being equivalent to a relative phase of $n2\pi$. In this embodiment, the surface 52 is arranged such that n=2, although in a further embodiment n=1, in a further embodiment n=3, and in a yet further embodiment n=4. In terms of a definition used for the present invention, the surface 52 includes 5 locations, corresponding to the intersections between the angles $\varphi_1$, $\varphi_2$, $\varphi_3$, $\varphi_4$ and $\varphi_5$ with a circle of constant radius $r_1$. Here, the first azimuthal angle $\varphi_1$ is located immediately to one side of the height step line 54, whilst the last azimuthal angle $\varphi_5$ is located immediately to the other side of the height step line 54. In this embodiment, the relative phase introduced at the location corresponding to angle $\varphi_1$, $\Phi(\varphi_1)=\delta$, where $\delta$ represents the negligible height relative to zero (at the height step size 54) due to $\varphi_1$ being spaced from the height step line 54 by a negligible amount. Taking successive relative phases, $\Phi(\varphi_2)=\pi$, $\Phi(\varphi_3)=2\pi$, $\Phi(\varphi_4)=3\pi$, and $\Phi(\varphi_5)=4\pi-\delta$. When taken in terms of modulo $2\pi$ form, the varied height of the surface 52 provides a phase profile such that the phases introduced successively cycle through 0 to $2\pi$, in each of two cycles, varying continuously from relatively low values to relatively high values. The element 40(A) generates a generally annular subsidiary beam spot.

Figures 4(A) and 4(B) show, in plan and side view respectively, a second embodiment of phase modulating element 40(B). In this embodiment, the phase modulating element 40(B) includes a planar first surface 60 and a non-planar second surface 62, which is divided into two half-segments 62(A) and 62(B). The two segments are separated by respective height step lines 64, 66. In each of the segments, the height of the surface 62 varies continuously from 0 to $2\pi$, increasing linearly with the azimuthal angle $\varphi$. In this embodiment, $\Phi(\varphi_1)=\delta$, $\Phi(\varphi_2)=\pi$, $\Phi(\varphi_3)=2\pi-\delta$, $\Phi(\varphi_4)=\delta$, $\Phi(\varphi_5)=\pi$, and $\Phi(\varphi_6)=2\pi-\delta$. Since the wavefront modulating characteristics of the phase profile are related to the relative phases when taken in modulo $2\pi$ form, the element 40(B) has the same effect as the element 40(A), and produces the same form of annular subsidiary beam spot.

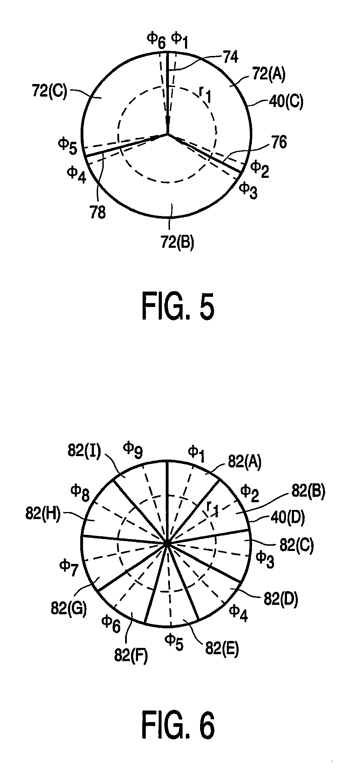

Figure 5 illustrates a third embodiment of phase modulating element 40(C), in which the phase profile cycles through 0 to $2\pi$ three times, i.e. n=3. As discussed above, the first embodiment of phase modulating element 40(A) may be arranged such that n=3. The third embodiment of the invention has the equivalent effect as the first embodiment 40(A) when n=3. In this embodiment, the non-planar surface 72 of the element 40(C) is divided into three segments 72(A), 72(B), 72(C), separated by respective height step lines 74, 76, 79. In this embodiment, the height of the surface 72 increases linearly with azimuthal angle within each of the segments, to generate a corresponding relative phase cycling from 0 to $2\pi$ in each segment. Thus, in this embodiment, $\Phi(\varphi_1)=\delta$, $\Phi(\varphi_2)=2\pi-\delta$, $\Phi(\varphi_3)=\delta$, $\Phi(\varphi_4)=2\pi-\delta$, $\Phi(\varphi_5)=\delta$ and $\Phi(\varphi_6)=2\pi-\delta$. In terms of the definition of the invention, at the six locations corresponding to the given azimuthal angles and the constant radius $r_1$, the relative phases introduced at the successive locations cycle through 0 to $2\pi$ three times.

Figure 6 illustrates a further embodiment of phase modulating element 40(D), whereby the phase profile generated by the phase modulating element 40(C) described above is approximated using corresponding segmented regions 82(A) to 82(I) in a fourth embodiment. In this embodiment, adjacent segments are separated by a corresponding height step line, and each segment takes a constant height. The height of each of the nine segments 82(A) to 82(I) corresponds with the height of the corresponding surface 72 of the phase modulating element 40(C) at the angular position at which the segment first appears on the surface 82 (as illustrated in Figure 6, the most anti-clockwise part of the segment). Thus, in this embodiment, the continuously-varying surface heights in the third embodiment of phase modulating element 40(C) are approximated by a series of corresponding stepped segments of constant-height and discontinuous step heights between segments in each of the three cycles in relative phase from 0 to $2\pi$. The second surface is similar to a series of steps of spiral stairs. In this embodiment, $\Phi(\varphi_1)=0$, $\Phi(\varphi_2)=2\pi/3$, $\Phi(\varphi_3)=4\pi/3$, $\Phi(\varphi_4)=0$, $\Phi(\varphi_5)=2\pi/3$, $\Phi(\varphi_6)=4\pi/3$, $\Phi(\varphi_7)=0$, $\Phi(\varphi_8)=2\pi/3$, and $\Phi(\varphi_9)=4\pi/3$. Thus, the phase profile is such that the phases introduced, when taken in modulo $2\pi$ form, successively cycle through 0 to $2\pi$, in each cycle taking successively higher values. More generally, in this embodiment, the phase modulating element has a phase profile having N segment-shaped regions, the N regions imparting relative phases advancing stepwise in the sequence of 0, $2\pi n/N$, $(2\pi n/N)x2$, $(2\pi n/N)x3$, .....and $(2\pi n/N)x(N-1)$, where n is an integer greater than one and the phases are taken in modulo $2\pi$ form. Preferably, as will be described in further detail below, the element has a phase profile as above, where n=3.

Consider the effect of the phase modulating element 40(A), which is similar to the effect of the other embodiments described above. This element 40 introduces a phase $\Phi(\varphi)$ with $(\rho,\varphi)$ the polar coordinates of the entrance pupil of the objective lens 12. The amplitude distribution $U(r,\psi)$ of the spot in the focal plane is then given by (see Born and Wolf, "Principal of Optics", Sixth Edition, Pergamon Press, Chapter 9):

$$U(r,\psi) = \frac{1}{\pi NA^2} \int_0^{NA}\int_0^{2\pi} e^{ik\rho r\cos(\psi-\varphi)}e^{i\Phi(\varphi)}\rho d\rho d\varphi \qquad (1)$$

where r and $\psi$ are the polar coordinates of the focal plane, k the wave vector ($=2\pi/\lambda$) and NA the numerical aperture of the converging beam. To simplify the integral expression (1) we write the phase term $\text{Exp}[i\Phi(\varphi)]$ as a series expansion in the following way:

$$e^{i\Phi(\varphi)} = \sum_{m=-\infty}^{\infty} a_m e^{im\varphi} \qquad (2)$$

Substituting (2) in (1) results in the following expression:

$$U(r,\psi) = \sum_{m=-\infty}^{\infty} \frac{a_m}{\pi NA^2} \int_0^{NA}\int_0^{2\pi} e^{ik\rho r\cos(\psi-\varphi)}e^{im\varphi}\rho d\rho d\varphi \qquad (3)$$

Then integrating with respect to $\varphi$ yields:

$$U(r,\psi) = \sum_{m=-\infty}^{\infty} \frac{2a_m e^{im\psi}}{NA^2}i^m \int_0^{NA} J_m(k\rho r)\rho d\rho \qquad (4)$$

where $J_m$ are Bessel functions of integer order. For $m \neq 0$ the spot becomes generally annular and the intensity distribution depends on the azimuthal angle $\psi$.

Taking for example the case where $\Phi(\varphi)=0$ we have $a_m = 0$ for $m \neq 0$ and $a_0 = 1$. Equation (4) can then be written as:

$$U(r,\psi) = \frac{2}{NA^2} \int_0^{NA} J_0(k\rho r)\rho d\rho = \frac{2J_1(k\,NA\,r)}{k\,NA\,r} \qquad (5)$$

The corresponding intensity distribution is then given by:

$$I(r,\psi) = \left|\frac{2J_1(k\,NA\,r)}{k\,NA\,r}\right|^2 \qquad (6)$$

which is the well known Airy distribution, which is seen in the main beam spot.

Taking, for the subsidiary beam phase profile in accordance with an embodiment of the invention, the case

where $\Phi(\varphi)=3\varphi$, hence the n=3 case, we have $a_m = 0$ for $m \neq 3$ and $a_3 = 1$. Equation (4) can then be written as

$$U(r,\psi) = \frac{2e^{i3\psi}}{NA^2}i^3\int_0^{NA}J_3(k\rho r)\rho d\rho \qquad (7)$$

The corresponding intensity distribution is $|U(r, \psi)|^2$.

In embodiments of the invention, where the angularly-varying surface is continuous, the phase profile generated by the phase modulating element 40 substantially corresponds with one wherein in equation (2) above, and one of the following applies: $a_m=0$ for $m \neq 2$ and $a_2=1$; $a_m=0$ for $m \neq 3$ and $a_3=1$; or $a_m=0$ for $m \neq 4$ and $a_4=1$. In embodiments of the invention where an ideal phase profile is approximated, for example by means of a stepped profile, one of the coefficients $a_1$, $a_2$, $a_3$ or $a_4$ preferably dominate the remaining coefficients, so that when an absolute value of the coefficient is taken a value of for example 0.5 or above is obtained. This characteristic is preferred so as to provide an annular intensity profile which is sufficiently well-defined in the area of the side-lobe of the main spot for crosstalk cancellation purposes.

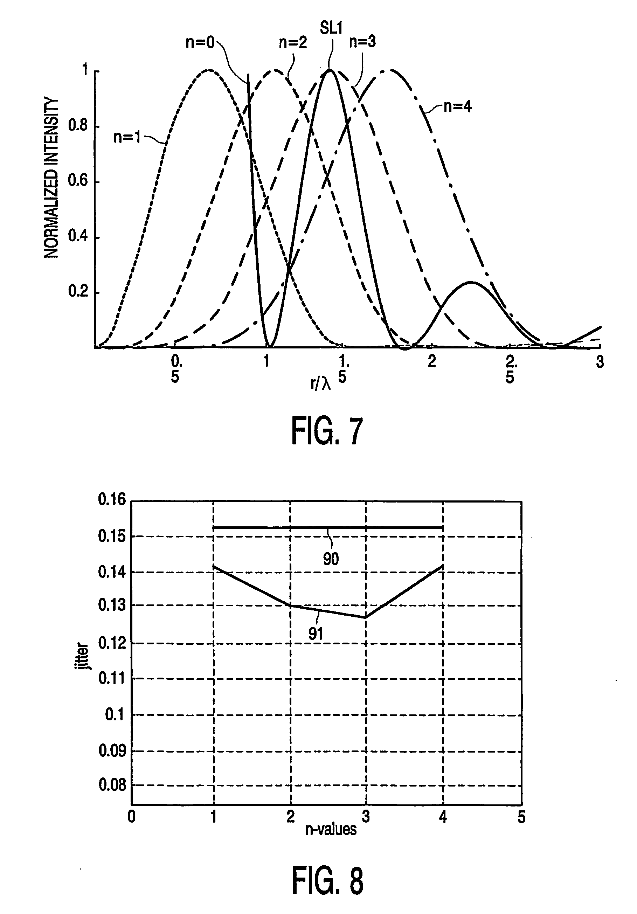

Figure 7 shows plots of the intensity distribution in the radial direction of the subsidiary beam spot for each of n=1, n=2, n=3, and n=4 against the intensity distribution for the main beam spot, of n=0. The intensity distribution of the subsidiary beam spot is rotationally symmetric for integer values of n. For ease of comparison, in the plots each maximum intensity for n>0 is scaled in such a way that it is the same as the maximum value of the intensity of the first side lobe SL1 of the n=0 case, which is set equal to one. Note that an area of highest intensity in each embodiment of subsidiary beam, defined for example as the area having greater than half the maximum intensity, is substantially annular. This compares with the area of greatest intensity in the main beam spot and each of the side beam spots being substantially disc-shaped. Note the overlap between the subsidiary beam spot and main beam spot's first side-lobe SL1, which is also substantially annular. Each of n=1, n=2, n=3 and n=4 have some degree of overlap, whereby to provide a suitable effect in crosstalk cancellation.

Figure 7 shows that for n=3 the best overlap occurs. This case gives rise to a better cancellation of crosstalk from neighboring tracks and a better reduction of inter-symbol interference of the track being scanned. The reduction of crosstalk is shown in the plots of Figure 8 obtained from simulations. The simulations used were based on waveforms generated via scalar diffraction computations for a ROM-type of disc (with d=2 RLL coding, and DVD-like parameters, apart from a more ambitious track-pitch, set equal to 680nm instead of 740nm). The simulations included 0.9° of radial disc tilt.

Referring to Figure 8, plot 90 shows a jitter level seen in a standard arrangement, where no crosstalk cancellation is used. Plot 91 shows a plot showing performance at different n-values, for a two-channel crosstalk cancellation arrangement using only the subsidiary beam spot signal and the main beam spot signal, in order to demonstrate the relative levels of improvement achievable using n=1, n=2, n=3 and n=4. In order of preference, n=3 is most preferred, whilst n=2, n=1 and n=4 follow in terms of crosstalk cancelling performance.

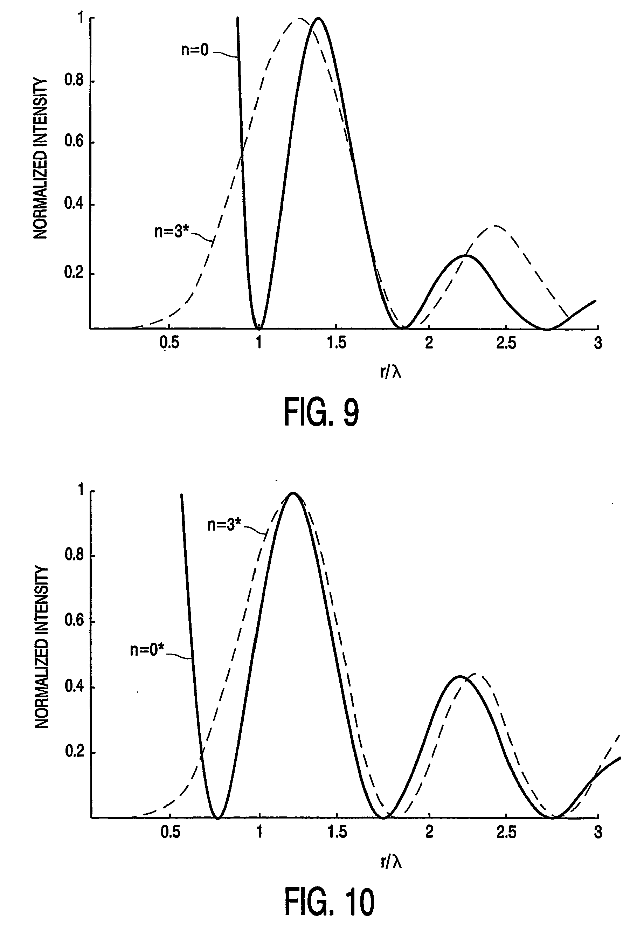

From Figure 7 it is possible to observe that the overlap of the n=3 subsidiary beam spot with the first side-lobe of the main beam spot is still not optimal. In particular, the width of the annular n=3 spot is wider than the first side lobe of the Airy spot. This can be improved by using super resolution blocking, for example applied to the n=3 subsidiary beam spot. Blocking can be achieved by covering the appropriate part of the objective lens with a polarization-selective coating. Blocking for instance the area $0 < r/r_{max} < 0.75$ on the subsidiary beam entrance pupil results in a spot intensity profile (intensity plot n=3*) as shown in Figure 9. Although the inner radius of the first annular part of the spot remains the same, the outer radius has been significantly reduced such that it coincides with the outer radius of the first side lobe of the main beam spot (intensity plot n=0).

It is possible to further improve the crosstalk cancellation performance using not only super-resolution blocking for the subsidiary beam but also for the main beam. Blocking can be achieved using an opaque coating on the objective lens where both beams are to be blocked, and using a polarization selective coating where only one of the two beams is to be blocked. By adjusting the super-resolution levels for the two-beams one can also alter the intensity profile of the first side-lobe of the main beam spot such that it coincides closely with the first annular part of the subsidiary beam spot for the n=3 case. Figure 10 shows the improved overlap first super-resolution side lobe of the subsidiary beam spot (intensity plot n=3*), where the entrance pupil is blocked for $0 < r/r_{max} < 0.95$ and where the entrance pupil for the super-resolution main beam spot (intensity plot n=0*) is blocked for $0 < r/r_{max} < 0.75$. Comparing Figure 10 with Figure 9, better overlap is observed. Blocking $0 < r/r_{max} < 0.75$ in the main beam results in a super-resolution spot with a full width at half maximum (FWHM) which is 0.79 times the FWHM of the standard Airy spot. Consequently, this would in principle allow an increase in data density of 60%.

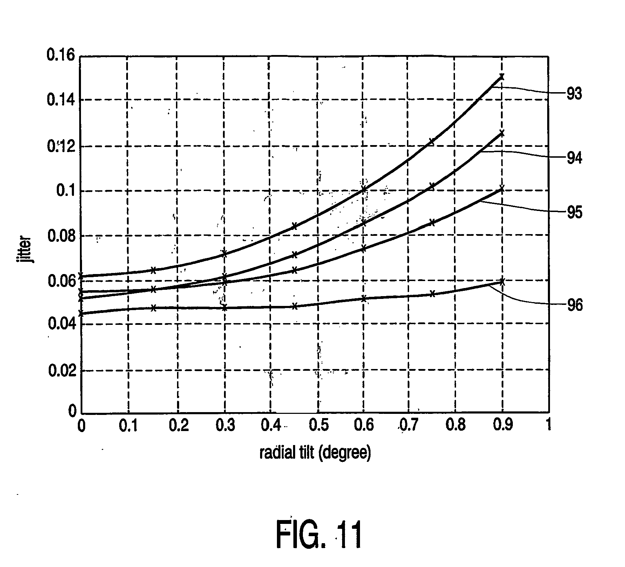

Figure 11 shows plots of jitter in the crosstalk-cancelled information signal as a function of radial disc tilt for various crosstalk cancellation methods. Plot 93 shows the jitter in the case of a standard arrangement, in which no crosstalk cancellation is implemented. Plot 94 shows the jitter in the case of a two-channel, main plus subsidiary beam, crosstalk cancellation method achieved using an n=3 phase modulating element, as illustrated and described in relation to Figure 5, in the subsidiary beam. Plot 95 shows the jitter in the case of crosstalk cancellation achieved using the prior art three channel, main plus two side beams, crosstalk cancellation. Plot 96 shows the jitter in the case of crosstalk cancellation achieved using a four channel crosstalk cancellation method in accordance with the present invention, achieved using the n=3 phase modulating element in the subsidiary beam. As can be seen from Figure 11, the crosstalk cancellation method of the present invention is capable of providing a significant improvement over the prior art methods.

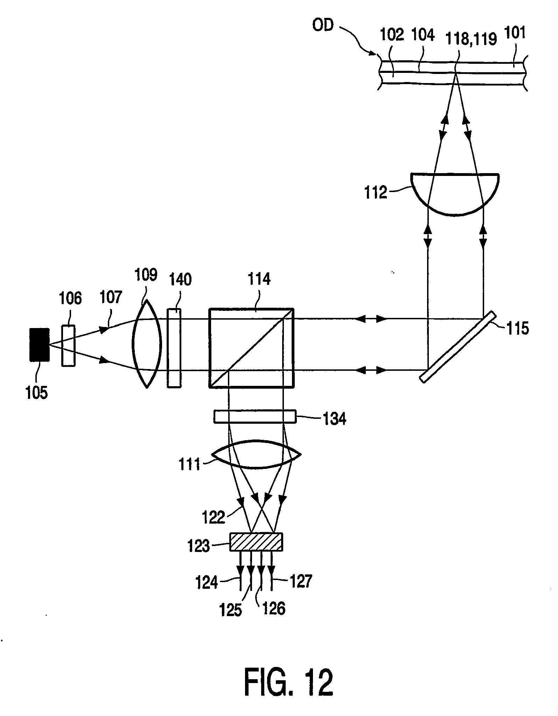

Figure 12 illustrates a further embodiment of an optical scanning device in accordance with the invention. Whilst in the embodiments described above, two radiation emitters providing orthogonally polarized radiation beams and a phase modulating arrangement is used in only one of the beam paths, similar functionality can be provided using fewer components instead using a birefringent phase modulating arrangement and a single radiation emitter providing a radiation beam polarized at an orientation of, for example, 45° to the axis of birefringence, referred to as the optic axis. Other angles of orientation may be used, for example to reduce the amount of radiation present in the subsidiary beam relative to that in the main beam.

In Figure 12, the elements corresponding to elements illustrated in Figure 1 are referenced using similar reference numerals incremented by 100, and the respective composition and functionality thereof should be taken to apply here. In this embodiment, the subsidiary beam, instead of being generated by a separate optical branch, is generated by a birefringent phase modulating element 140. A linearly polarized radiation beam 107 is generated by a radiation source 105 comprising e.g. a single semiconductor laser. A polarization dependent three spots grating, formed for example of a birefringent material having an optic axis arranged at 45° to the direction of polarization of the beam 107, generates two side beams, which are displaced from the main beam, in one of the two polarization components, one of which is parallel and the other of which is orthogonal to the optic axis of the material. The optic axis of the birefringent element 140 is also arranged at 45° to the direction of polarization of the beam 107. The birefringent phase modulating element 140 has no phase modulating effect on one polarization component, which forms the main beam and the two side beams, and has a phase modulating effect on the orthogonal polarization component, which forms the subsidiary beam. In this arrangement, the main beam (reference to which includes reference to the side beams generated by grating 106) and the subsidiary beam, following their non-modulation and modulation by the phase modulating element 140 respectively, follow the same paths as the main and subsidiary beams in the first embodiment (Figure 1) after their combination using polarizing beam splitter 13.

The phase modulating element 140 is a stepped birefringent structure such that for one polarization the structure has no effect while for the orthogonal polarization a linearly varying azimuthal phase profile is approximated, in a manner similar to that of the segmented phase modulating element 40(D) described above in relation to Figure 6. The birefringent element 140 has a similar structure to that of the segmented element 40(D), except that the step heights are different and the material of the element is birefringent.

The element 140 is formed from birefringent material having an extraordinary refractive index $n_e$ and an ordinary refractive index $n_o$. In the following the change in refractive index due to difference in wavelength is neglected and therefore the refractive indices $n_e$ and $n_o$ are approximately independent of the wavelength. In this embodiment, and by way of illustration only, the birefringent material is C6M/E7 present 50/50 (in % by weight) with $n_o$=1.51 and $n_e$=1.70. Alternatively, for example, the birefringent material may be C6M/C3M/E7 present 40/10/50 (in % by weight) with $n_o$=1.55 and $n_e$=1.69. Here, the E7, C3M and C6M codes used refer to the following formulations:

E7 is formed from 51% C5H11 cyanobiphenyl, 25% C5H15 cyanobiphenyl, 16% C8H17 cyanobiphenyl and 8% C5H11 cyanotriphenyl;
C3M is formed from 4-(6-acryloyloxypropyloxy)benzoyloxy-2-methylphenyl 4-(6-acryloyloxypropyloxy)benzoate; and
C6M is formed from 4-(6-acryloyloxyhexyloxy)benzoyloxy-2-methylphenyl 4-(6-acryloyloxyhexyloxy) benzoate.

The birefringent element 140 is formed such that its refractive index equals $n_e$ when traversed by a radiation beam having a polarization which is aligned in one direction perpendicular to the optical axis (along an X-axis) and $n_o$ when traversed by a radiation beam having a polarization along the orthogonal Y-axis. In the following the polarization of a radiation beam is called "$p_e$" and "$p_o$" where aligned with the X-axis and the Y-axis, respectively.

In the following embodiment, and by way of illustration only, the phase change $\Phi$ of the main beam wavefront due to the segment structure remains unaffected, since the beam has polarization $p_e$, while for the subsidiary beam, having the orthogonal polarization $p_o$, it approximates the following phase profile:

$$\Phi(\varphi) = 3\varphi \quad \text{for } 0 < \varphi < 2\pi. \tag{8}$$

The structure is made of birefringent material having, say, $n_o$ =1.51 and $n_e$ =1.70. The wavelength of the radiation is for example $\lambda$=650 nm. Furthermore, the beam incident on the optical disc OD has a numerical aperture of NA=0.65. The element 140 includes nine segments of equal area, each segment having a respective step height $h_j$. Consider a step height $h_{ref}$ which is defined as follows:

$$h_{ref} = \frac{\lambda}{n_e - n_s} \qquad (9)$$

where $n_s$ is the refractive index of the medium adjacent the segmented structure that is, in the following and by way of illustration only, air, i.e. $n_s$=1. This step height gives rise to a phase change equal to $2\pi$ for the beam having polarization $p_e$. Hence when the step height $h_j$ of the stepped structure are integer multiples of $h_{ref}$, the phase change equals zero (when taken in modulo $2\pi$ form) for the main beam having polarization $p_e$.

For the subsidiary beam, which has polarization $p_o$, the above steps no longer introduce phase steps equal to a multiple of $2\pi$. Table 1 below gives the relative phase introduced by the first twelve step heights which are selected as integral multiples m of $h_{ref}$ for the $p_o$ polarization.

Table 1

| m | m $h_{ref}$ [$\mu$m] | $\Phi(p_o)/2\pi$ (modulo 1) |
|---|---|---|
| 1 | 0.9286 | 0.7286 |
| 2 | 1.8572 | 0.4572 |
| 3 | 2.7858 | 0.1857 |
| 4 | 3.7144 | 0.9143 |
| 5 | 4.6430 | 0.6429 |
| 6 | 5.5716 | 0.3715 |
| 7 | 6.5002 | 0.1000 |
| 8 | 7.4288 | 0.8286 |
| 9 | 8.3574 | 0.5572 |
| 10 | 9.2860 | 0.2858 |
| 11 | 10.2146 | 0.0143 |
| 12 | 11.1432 | 0.7429 |

Note that there are eleven substantially different step heights possible for the $p_o$ polarization fulfilling the requirement that for the $p_e$ polarization the steps gives rise to phase heights which are a multiple of $2\pi$. Where m=12 and above, similar amounts of phase are generated to that generated for one of the first eleven step heights. The different step heights of the phase modulating element can be made using a lathe that rotates the element around its optical axis and which has a cutting tool that makes as many excursions in the direction of the optical axis during each revolution of the element as are necessary to generate the pattern of step heights.

In this embodiment, the phase modulating element 140 has a structure similar to that illustrated and described in relation to Figure 6 above, with nine segmented regions in which a respective constant step height, $h_j$, is provided as described below in table 2.

Table 2

| j | $\varphi_{begin}/2\pi$ | $\varphi_{end}/2\pi$ | m | $h_j$ [$\mu$m] | $\Phi(p_o)/2\pi$ (modulo 1) |
|---|---|---|---|---|---|
| 1 | 0 | 0.111 | 0 | 0 | 0.0000 |
| 2 | 0.111 | 0.222 | 6 | 5.5716 | 0.3715 |
| 3 | 0.222 | 0.333 | 5 | 4.6430 | 0.6429 |
| 4 | 0.333 | 0.444 | 0 | 0 | 1.0000 |

(continued)

| j | $\varphi_{begin}/2\pi$ | $\varphi_{end}/2\pi$ | m | $h_j$ [μm] | $\Phi(p_o)/2\pi$ (modulo 1) |
|---|---|---|---|---|---|
| 5 | 0.444 | 0.555 | 6 | 5.5716 | 1.3715 |
| 6 | 0.555 | 0.666 | 5 | 4.6430 | 1.6429 |
| 7 | 0.666 | 0.777 | 0 | 0 | 2.0000 |
| 8 | 0.777 | 0.888 | 6 | 5.5716 | 2.3715 |
| 9 | 0.888 | 1.000 | 5 | 4.6430 | 2.6429 |

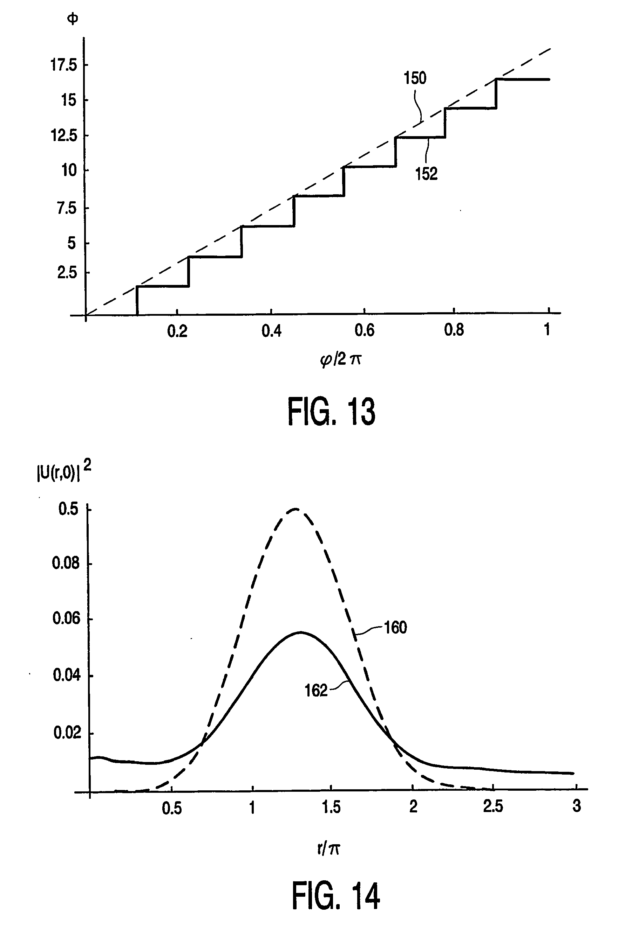

Figure 13 plots, using line 152, the phase introduced by the segmented structure as defined in table 2 in the subsidiary beam by each successive segment in the phase modulating element 140 as a function of the azimuthal angle $\varphi$. For the sake of illustration, the phase generated in each cycle of $2\pi$ is successively incremented by $2\pi$ to show the approximation with a continually varying phase profile 150 of an appropriate form for n=3.

Figure 14 plots, using line 162, the generally annular spot shape generated by the segmented structure as defined in table 2. The intensity is normalized against, and shown with a plot of the intensity profile achieved with a continually varying phase profile 150 of an appropriate form for n=3. Note that making the structure out of only nine uniform-height segments results in an annular spot substantially approximating the desired spot intensity profile. Using the expansion defined in Equation (2) we find for this case that the absolute value of the dominating coeffcient, $|a_3|$=0.81.

It should be understood that, although 9 segments are used in this embodiment, other numbers of segments may be used. Preferably, the number of segments is between 5 and 25, to provide sufficient crosstalk cancellation efficiency whilst maintaining a relatively small number of regions, for manufacturing efficiency. For similar reasons, preferably at least three segments, and preferably less than six segments, are used in each cycle of phase from 0 to $2\pi$.

It is noted that the surface structures used in the above-described embodiments are substantially constant in thickness along the radial direction in each of the phase modulating elements. Whilst this is preferred in the case where the desired phase profile is provided based on a planar element (e.g. on a plane parallel plate) and while the wavefront of the incoming beam is flat, in alternative embodiments the desired phase profile is provided on a curved surface (e.g. that of a lens) and/or the incoming beam has a vengeance with a best fit radius that substantially differs from the curvature of the surface. In these alternative embodiments the surface structure may be adjusted in the radial direction so as to generate the desired phase change patterns in the azimuthal direction.

Thus, in embodiments of the invention which employ a scheme combining a three-spot crosstalk cancelling method with the provision of an orthogonally polarized subsidiary beam which produces an annular shaped orthogonally polarized spot, the crosstalk cancellation performance can be considerably improved. A significant gain in jitter is realized, compared to the standard 3-spots crosstalk cancellation approach. This is because that the extra annular-spot channel is sufficiently orthogonal to the other two side-channels (provided by the side beams for 3-spots crosstalk cancellation), that a significantly better correction of the main channel can be achieved.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. An optical scanning device for scanning an optical record carrier comprising an information layer, the device comprising:

   a radiation source arrangement (5, 6, 36; 105, 106) for generating a main radiation beam, (7) a subsidiary radiation beam (37) and at least one side radiation beam;
   a lens system (9, 12, 39; 109, 112), located between the radiation source arrangement and the information layer, for converging the main beam (7), the subsidiary beam (37) and the at least one side beam to respective spots on the information layer;
   a radiation detector arrangement (23; 123) for detecting information signals in each of the main beam, the at least one side beam and the subsidiary beam; and

a signal processing arrangement (41, 42, 43, 44, 46, 47, 49) for conducting crosstalk cancellation using the information signals detected in each of said main beam (7), and said subsidiary beam (37) to generate an output information signal, wherein the device is arranged such that the main beam spot and the subsidiary beam spot are substantially coaxial, the at least one side beam spot is displaced with respect to the main beam spot, and the subsidiary beam spot has a radial intensity profile which is different to the intensity profile of the main beam spot;

the signal processing arrangement being **characterized in** further using additionally the information signal detected in said at least one side beam for conducting crosstalk cancellation.

2. An optical scanning device according to claim 1, wherein the device is arranged such that the main beam spot has a side lobe which is substantially annular and the subsidiary beam spot has an area of greatest intensity which is substantially annular.

3. An optical scanning device according to claim 1 or 2, comprising a phase modulating arrangement (40, 140) for generating a angularly-varying phase profile in the subsidiary beam (37), the phase profile varying with an azimuthal angle measured about an optical axis of the subsidiary beam (37).

4. An optical scanning device according to claim 3, wherein the phase profile is such that the phases introduced, when taken in modulo $2\pi$ form, successively cycle through 0 to $2\pi$ at least twice, in each cycle taking at least a relatively low value and a relatively high value, in a single rotation about the optical axis.

5. An optical scanning device according to claim 4, wherein the phase profile is such that the phases introduced cycle through 0 to $2\pi$ three times.

6. An optical scanning device according to claim 3, 4 or 5, wherein the phase modulating arrangement comprises an element placed in the path of both the main beam (7) and the subsidiary beam (37) and having substantially no effect on the phase profile of the main beam (7), the element providing the said phase profile in the subsidiary beam (37).

7. An optical scanning device according to any of claims 3 to 6, wherein the phase modulating arrangement comprises a plurality of angularly-spaced segments, each of the segments individually having a substantially constant phase profile taken at a constant radius.

8. An optical scanning device according to any of claims 3 to 6, wherein the phase modulating arrangement comprises a surface providing a continuously varying phase profile taken at a constant radius.

9. An optical scanning device according to any preceding claim, wherein the main beam (7) has a first polarization and the subsidiary beam (37) has a second, substantially orthogonal, polarization.

10. An optical scanning device according to any preceding claim, wherein the main beam (7), the two side beams and the subsidiary beam (37) are generated using a single radiation emitter (105).

**Patentansprüche**

1. Optische Abtasteinrichtung zum Abtasten eines optischen Aufzeichnungsträgers mit einer Informationsschicht, wobei diese Einrichtung Folgendes umfasst:

   - eine Strahlungsquellenanordnung (5, 6, 36; 105, 106) zum Erzeugen eines Hauptstrahlungsbündels (7), eines sekundären Strahlungsbündels (37) und wenigstens eines Nebenstrahlungsbündels;
   - ein Linsensystem (9, 12, 39; 109, 112), vorgesehen zwischen der Strahlungsquellenanordnung und der Informationsschicht, zum Konvergieren des Hauptbündels (7), des sekundären Bündels (37) und des wenigstens einen Nebenbündels zu betreffenden Punkten auf der Informationsschicht;
   - eine Strahlungsdetektoranordnung (23; 123) zum Detektieren von Informationssignalen in dem Hauptbündel, dem wenigstens einen Nebenbündel und dem sekundären Bündel; und
   - eine Signalverarbeitungsanordnung (41, 42, 43, 44, 46, 47, 49) zum Steuern von Übersprechdämpfung unter Verwendung von Informationssignalen, die in dem genannten Hauptbündel (7) und in dem genannten sekundären Bündel (37) detektiert wurden, und zwar zum Erzeugen eines Ausgangsinformationssignals, wobei die Anordnung derart vorgesehen ist, dass der Hauptbündelpunkt und der Sekundärbündelpunkt nahezu koaxial sind,

wobei der wenigstens eine Nebenbündelpunkt gegenüber dem Hauptbündelpunkt verlagert ist, und der Sekundärbündelpunkt ein Profil der radialen Intensität hat, das anders ist als das Intensitätsprofil des Hauptbündelpunktes; wobei die Signalverarbeitungsanordnung das Kennzeichen aufweist, dass sie weiterhin zusätzlich das in dem genannten wenigstens einen Nebenbündel detektierte Informationssignal zur Steuerung von Übersprechdämpfung verwendet.

2. Optische Abtasteinrichtung nach Anspruch 1, wobei die Einrichtung derart vorgesehen ist, dass der Hauptbündelpunkt eine Nebenkeule hat, die im Wesentlichen ringförmig ist und der Sekundärbündelpunkt hat ein Gebiet größter Intensität, das im Wesentlichen ringförmig ist.

3. Optische Abtasteinrichtung nach Anspruch 1 oder 2, mit einer Phasenmodulationsanordnung (40, 140) zum Erzeugen eines ringförmig variierenden Phasenprofils in dem sekundären Bündel (37), wobei das Phasenprofil mit einem Azimutwinkel, gemessen um eine optische Achse des sekundären Bündels (37) variiert.

4. Optische Abtasteinrichtung nach Anspruch 3, wobei das Phasenprofil derart ist, dass die eingeführten Phasen, wenn in der Modulo-$2\pi$-Form, nacheinander wenigstens zweimal durch 0 bis $2\pi$ umlaufen, wobei in einer einzigen Umdrehung um die optische Achse in jedem Umlauf wenigstens ein relativ niedriger Wert und ein relativ hoher Wert angenommen wird.

5. Optische Abtasteinrichtung nach Anspruch 4, wobei das Phasenprofil derart ist, dass die eingeführten Phasen dreimal durch 0 bis $2\pi$ umlaufen.

6. Optische Abtasteinrichtung nach Anspruch 3, 4 oder 5, wobei die Phasenmodulationsanordnung ein Element aufweist, das in der Strecke des Hauptbündels (7) und des sekundären Bündels (37) vorgesehen ist, und im Wesentlichen keinen Effekt auf das Phasenprofil des Hauptbündels (7) hat, wobei das Element das genannte Phasenprofil in dem sekundären Bündel (37) schafft.

7. Optische Abtasteinrichtung nach einem der Ansprüche 3 bis 6, wobei die Phasenmodulationsanordnung eine Anzahl ringförmig auseinander liegende Segmente aufweist, wobei jedes Segment einzeln ein im Wesentlichen konstantes Phasenprofil mit einem konstanten Radius hat.

8. Optische Abtasteinrichtung nach einem der Ansprüche 3 bis 6, wobei die Phasenmodulationsanordnung eine Oberfläche hat, die ein ständig variierendes Phasenprofil mit einem konstanten Radius schafft.

9. Optische Abtasteinrichtung nach einem der vorstehenden Ansprüche, wobei das Hauptbündel (7) eine erste Polarisation und das sekundäre Bündel (37) eine zweite, im Wesentlichen orthogonale Polarisation hat.

10. Optische Abtasteinrichtung nach einem der vorstehenden Ansprüche, wobei das Hauptbündel (7), die zwei Nebenbündel und das sekundäre Bündel (37) unter Verwendung eines einzigen Strahlungsemitters (105) erzeugt werden.

**Revendications**

1. Dispositif de balayage optique pour balayer un support d'enregistrement optique comprenant une couche d'informations, le dispositif comprenant :

un agencement de source de rayonnement (5, 6, 36 ; 105, 106) pour générer un faisceau de rayonnement principal (7), un faisceau de rayonnement secondaire (37) et au moins un faisceau de rayonnement latéral ; un système de lentille (9, 12, 39 ; 109, 112), situé entre l'agencement de source de rayonnement et la couche d'informations, pour faire converger le faisceau principal (7), le faisceau secondaire (37) et le au moins un faisceau latéral vers des points respectifs sur la couche d'informations ; un agencement de détecteur de rayonnement (23 ; 123) pour détecter des signaux d'informations dans chacun du faisceau principal, de le au moins un faisceau latéral et du faisceau secondaire ; et un agencement de traitement de signal (41, 42, 43, 44, 47, 49) pour opérer l'annulation de diaphonies en utilisant les signaux d'informations détectés dans chacun dudit faisceau principal (7) et dudit faisceau secondaire (37) afin de générer un signal d'informations de sortie, dans lequel le dispositif est agencé de telle sorte que le point de faisceau principal et le point de faisceau secondaire soient sensiblement coaxiaux, le au moins un point de faisceau latéral est déplacé par rapport au point de faisceau principal, et le point de faisceau secondaire a un profil d'intensité radial qui est différent du profil d'intensité du point de faisceau principal ;

l'agencement de traitement de signal étant **caractérisé en ce qu'**il utilise en outre de manière supplémentaire le signal d'informations détecté dans ledit au moins un faisceau latéral pour opérer l'annulation de diaphonies.

2. Dispositif de balayage optique selon la revendication 1, dans lequel le dispositif est agencé de telle sorte que le point de faisceau principal ait un lobe latéral qui soit sensiblement annulaire et le point de faisceau secondaire possède une zone d'intensité la plus élevée qui est sensiblement annulaire.

3. Dispositif de balayage optique selon la revendication 1 ou 2, comprenant un agencement de modulation de phase (40, 140) pour générer un profil de phase à variation angulaire dans le faisceau secondaire (37), le profil de phase variant selon un angle azimutal mesuré autour d'un axe optique du faisceau secondaire (37).

4. Dispositif de balayage optique selon la revendication 3, dans lequel le profil de phase est tel que les phases introduites, lorsqu'elles sont considérées sous la forme modulo 2π, effectuent successivement un cycle de 0 à 2π au moins deux fois, en prenant dans chaque cycle au moins une valeur relativement faible et une valeur relativement élevée, en une seule rotation autour de l'axe optique.

5. Dispositif de balayage optique selon la revendication 4, dans lequel le profil de phase est tel que les phases introduites effectuent un cycle de 0 à 2π à trois reprises.

6. Dispositif de balayage optique selon la revendication 3, 4 ou 5, dans lequel l'agencement de modulation de phase comprend un élément placé dans la trajectoire d'à la fois le faisceau principal (7) et le faisceau secondaire (37) et n'ayant sensiblement aucun effet sur le profil de phase du faisceau principal (7), l'élément fournissant ledit profil de phase dans le faisceau secondaire (37).

7. Dispositif de balayage optique selon l'une quelconque des revendications 3 à 6, dans lequel l'agencement de modulation de phase comprend une pluralité de segments espacés de manière angulaire, chacun des segments ayant individuellement un profil de phase sensiblement constant considéré à un rayon constant.

8. Dispositif de balayage optique selon l'une quelconque des revendications 3 à 6, dans lequel l'agencement de modulation de phase comprend une surface fournissant un profil de phase à variation continue considéré à un rayon constant.

9. Dispositif de balayage optique selon l'une quelconque des revendications précédentes, dans lequel le faisceau principal (7) a une première polarisation et le faisceau secondaire (37) a une seconde polarisation, sensiblement orthogonale.

10. Dispositif de balayage optique selon l'une quelconque des revendications précédentes, dans lequel le faisceau principal (7), les deux faisceaux latéraux et le faisceau secondaire (37) sont générés en utilisant un seul émetteur de rayonnement (105).

**FIG. 1**

FIG. 2

FIG. 3A

FIG. 3B

FIG. 4A

FIG. 4B

FIG. 5

FIG. 6

FIG. 7

FIG. 8

**FIG. 9**

**FIG. 10**

FIG. 11

FIG. 12

FIG. 13

FIG. 14

**REFERENCES CITED IN THE DESCRIPTION**

**Patent documents cited in the description**

- US 6163518 A
- EP 0597202 A
- US 6115345 A
- US 6185168 A
- EP 0735527 A